# FASCICULE DE BREVET EUROPEEN

(11) **EP 3 856 870 B1**
(45) Date de publication et mention de la délivrance du brevet: **21.09.2022**
(21) Numéro de dépôt: 19773836.2
(22) Date de dépôt: 25.09.2019
(51) Int. Cl.: C10B 7/02, C10B 53/02, F27B 3/04, F27B 9/14, F27B 9/18, F27D 3/04

(54) **FOUR A SOLES MULTIPLES COMPRENANT DES BRAS SUPPORTANT DES DENTS DE RABLAGE A PROFIL OPTIMISE, APPLICATION A LA TORREFACTION DE BIOMASSE**
MEHRREGALOFEN MIT ARMEN MIT KRATZERZÄHNEN MIT OPTIMIERTEM PROFIL, ANWENDUNG ZUM RÖSTEN VON BIOMASSE
MULTI-SHELF FURNACE COMPRISING ARMS BEARING RABBLE TEETH OF OPTIMIZED PROFILE, APPLICATION TO THE ROASTING OF BIOMASS

(30) Priorité: 26.09.2018 FR 1858786
(43) Date de publication de la demande: 04.08.2021
(73) Titulaire: Commissariat à l'Energie Atomique et aux Energies Alternatives, 75015 Paris (FR); Cockerill Maintenance & Ingenierie S.A., 4100 Seraing (BE)
(72) Inventeur: BERTHELLEMY, Alain, 38054 GRENOBLE Cedex 09 (FR); MELKIOR, Thierry, 38054 GRENOBLE Cedex 09 (FR); BEL, Quentin, 52170 BAYARD SUR MARNE (FR); COTTENIER, Gauthier, 4050 CHAUDFONTAINE (BE); LEBOUTTE, Didier, 4000 LIEGE (BE); MARECHAL, Denis, 4040 HERSTAL (BE)
(74) Mandataire: Nony
(86) Numéro de dépôt international: PCT/EP2019/075954
(87) Numéro de publication internationale: WO 2020/064891

(56) Documents cités:
- WO-A1-2017/134075
- DE-A1- 2 221 635
- FR-A- 536 540
- FR-A1- 2 376 391
- GB-A- 201 216

## Description

### Domaine technique

La présente invention concerne un four à soles multiples, encore appelé four à multi-étages (en anglais « multiple hearth furnace » d'acronyme MHF).

L'invention vise à améliorer le râblage de la charge de matière à traiter thermiquement au sein du four, notamment en vue d'obtenir un transfert homogène et maitrisé de la matière.

Par «râblage», on entend dans le cadre de l'invention, l'action de brasser la matière à traiter thermiquement, de l'étaler en la divisant et de la faire transiter dans le four de sole en sole..

Une application privilégiée de l'invention est la torréfaction de biomasse, de préférence de biomasse ligno-cellulosique.

Par « biomasse», on entend dans le cadre de l'invention, tout matériau inhomogène d'origine végétale ou animale contenant du carbone, telle que de la biomasse ligno-cellulosique, des résidus forestiers ou agricoles (paille), qui peut être quasi-sec ou imbibé d'eau comme les déchets ménagers.

En particulier, la biomasse peut être de type ligno-cellulosique, telle que le bois et les matières agricoles et présenter n'importe quel taux d'humidité, de préférence comprenant entre 10 et 60% d'eau, et être introduite dans l'installation selon l'invention sous toutes formes variées telle que plaquettes, granulés...

Bien que décrite en référence à l'application de torréfaction de biomasse, le four à soles multiples selon l'invention peut être utilisé pour de nombreuses autres applications parmi lesquelles on peut citer le traitement thermique de minerais (coke, chamotte...), de charbon, de boues de station d'épuration.

### Etat de la technique

Dans un contexte où la consommation ne cesse d'augmenter, la valorisation de la biomasse est envisagée afin de diversifier les ressources d'énergies. Les filières de conversion thermique par gazéification et combustion sont particulièrement envisagées.

Les usines dites « Biomass to Liquid », désignées sous l'acronyme anglais BtL sont des usines destinées à mettre en œuvre un procédé de conversion thermochimique de la biomasse par gazéification en vue de produire un carburant liquide. Ces usines BtL ont déjà été largement décrites avec un grand nombre de données économiques tant en investissement qu'en coût de production : [1], [2]. Les usines BtL, plus généralement les usines destinées à produire un carburant gazeux ou liquide à partir de la biomasse, qui sont actuellement conçues sont des projets de démonstration qui visent à tester et valider toute la chaine technologique du procédé de conversion thermochimique. La première étape mise œuvre ou procédé à part entière consiste en un séchage de la biomasse humide. En effet, l'humidité de la biomasse fraîchement collectée est typiquement comprise entre 30 et 50%, ce taux initial d'humidité variant en fonction du type de biomasse, de la période de collecte et de l'endroit où est stockée la biomasse. Il a déjà été prouvé que l'eau contenue dans le biomasse réduit fortement le rendement de gazéification du fait que cela implique la génération de vapeur d'eau inutile et une évaporation de l'eau nécessaire dans le réacteur de gazéification. En outre, il est d'ores et déjà admis que le séchage naturel de la biomasse ne peut être réellement envisagé dans une application industrielle compte tenu du temps nécessaire : [3], [4], [5].

En d'autres termes, à l'échelle industrielle seul un séchage forcé de la biomasse peut être envisagé. Il semble de même admis que le séchage de la biomasse ligno-cellulosique en dessous d'un taux d'humidité de l'ordre de 15% s'avère inutile du fait qu'en dessous de cette valeur le bois s'avère être très hygroscopique et ré-adsorbe l'eau lorsqu'exposé à de l'air durant son transfert vers le réacteur de gazéification et son stockage intermédiaire. En outre, l'extraction des derniers pourcents d'humidité augmente considérablement la consommation énergétique. Ainsi, il semble admis qu'un séchage de la biomasse aux alentours d'un taux d'humidité de 15% avant sa gazéification est un bon compromis en termes d'efficacité de rendement de conversion et de consommation énergétique requise.

La torréfaction de la biomasse de préférence ligno-cellulosique, est une étape de prétraitement de la biomasse en vue de son injection sous forme pulvérisée dans un réacteur à flux entraîné (réacteur de gazéification) ou dans un réacteur dit de co-combustion biomasse et charbon dans une centrale thermique à charbon ou en vue de sa mise sous forme de granulés. En effet, la structure fibreuse et élastique de la biomasse rend sa micronisation énergivore et confère au produit broyé des caractéristiques inadaptées à une injection sous forme pulvérisée. La torréfaction est un traitement thermique doux de la biomasse à l'interface entre le séchage et la pyrolyse, généralement réalisé à des températures comprises entre 200 et 300°C et qui vise à éliminer l'eau et à modifier une partie de la matière organique de la biomasse pour casser ses fibres. Autrement dit, ce traitement thermique doux altère la structure fibreuse de la biomasse, facilitant ainsi par la suite son broyage et son injection en réacteur de gazéification ou de co-combustion.

Le prétraitement par torréfaction améliore également les propriétés de la biomasse en vue de son stockage en lui conférant notamment un caractère hydrophobe et une résistance aux dégradations biologiques. La granulation est également une application possible après torréfaction de la matière.

Les produits issus de la torréfaction sont le solide, les gaz de torréfaction et les condensables.

Dans une installation de séchage et de torréfaction de la biomasse ligno-cellulosique actuellement connue, on peut distinguer trois unités principales:
- un réacteur de préchauffage/séchage dans lequel la charge d'alimentation de biomasse est chauffée et une partie de l'humidité peut être évaporée, comme évoqué ci-dessus ;
- un réacteur de torréfaction dans lequel la biomasse séchée est chauffée à la température de torréfaction, l'humidité résiduelle est complètement enlevée et un phénomène de dépolymérisation a lieu ;
- une unité de refroidissement du produit torréfié dans laquelle ce dernier est refroidi dans une atmosphère inerte.

Les réacteurs de torréfaction existants sont de type rotatif, à multi-étages aussi appelés à soles multiples (en anglais « multiple hearth furnace » d'acronyme MHF), à tunnel saturé en liquide ou en vapeur, à vis ou bien encore à lit fluidisé.

Les fours à soles multiples actuels fonctionnent sous pression atmosphérique, dans une gamme de température entre 250°C et environ 1050°C et avec une grande surface de réaction possible. Ils présentent aussi l'avantage de brasser continuellement le produit à traiter. En plus de la torréfaction de biomasse, ils sont utilisés dans le domaine de l'environnement (pyrolyse de déchets solides, régénération de charbon) et des matières premières (calcination et recristallisation de minerais industriels ainsi que pyrométallurgie).

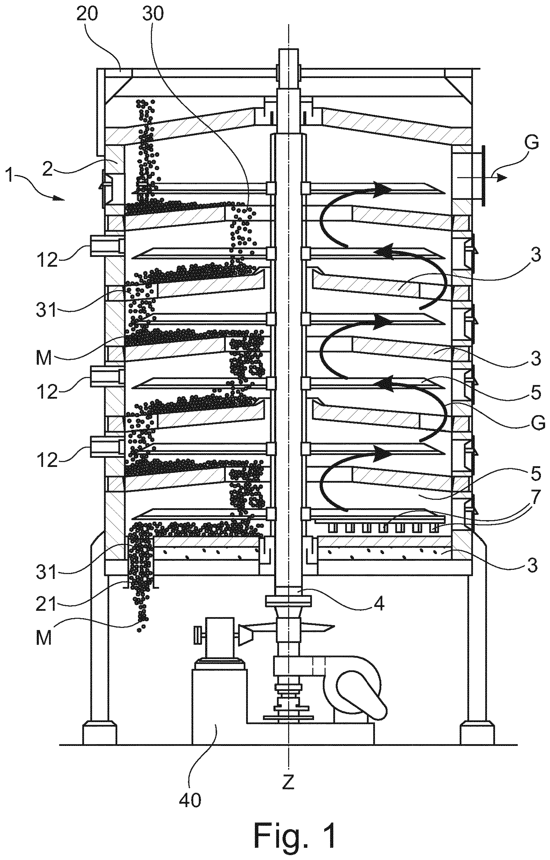

Les figures 1 à 4 représentent schématiquement un four à soles multiples selon l'état de l'art, globalement désigné par la référence 1 avec ses différents composants. Le four 1 comprend une enveloppe 2 à l'intérieur de laquelle est fixée une série de soles ou plaques de cuisson 3 à section circulaire, agencées parallèlement les unes au-dessus des autres. Les soles 3 ainsi que l'enveloppe 2 peuvent être en acier recouvert de matériau réfractaire. Un arbre rotatif 4 est agencé à la verticale selon l'axe central Z du four. L'arbre rotatif 4 peut êre mis en rotation au moyen d'un ensemble moto-réducteur 40. L'arbre rotatif 4 supporte des bras 5, dit de râblage, qui y sont fixés en étant agencés au-dessus de chaque sole 3. Par exemple, quatre bras de râblage 5 régulièrement espacés de 90° les uns par rapport aux autres sont fixés au-dessus de chaque sole 3. Les bras de râblage 5 ont chacun pour fonction de brasser la charge M, telle que la biomasse, alimentant le four depuis une ouverture débouchante supérieure 20 de l'enveloppe 2 et la déplacer à travers chaque sole 3 selon un parcours en hélice jusqu'à une ouverture débouchante inférieure 21 de l'enveloppe 2 où la matière est déchargée.

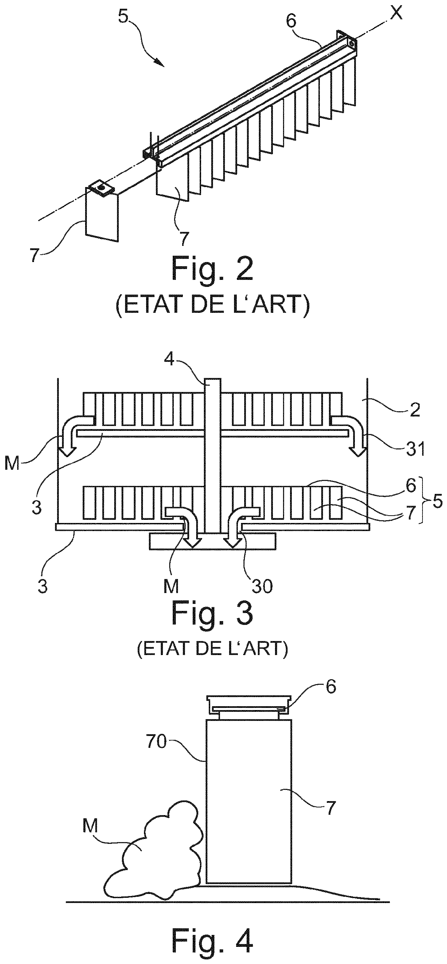

Comme montré en figure 2, chaque bras de râblage 5 comprend un profilé 6 sur lequel sont fixées une pluralité de dents identiques 7, dites dents de râblage, à section rectangulaire, agencées parallèles entre elles, perpendiculaires au profilé mais toutes inclinées avec un angle d'inclinaison α différent de 90° par rapport à l'axe longitudinal X du profilé 6.

Par ailleurs, les dents de râblage 7 sont toutes centrées sur l'axe X du profilé 6, c'est-à-dire que la largeur L de chaque dent est répartie équitablement de part et d'autre de l'axe X.

Les dents de râblage 7 avec leur profilé support 6 constituent un outil en forme de râteau, qui permet de transférer la charge M d'une sole 3 vers la sole adjacente en dessous, de la manière la plus homogène possible, et en la mélangeant le plus possible, afin que chaque particule de charge reçoive la même quantité de chaleur lors de son passage dans le four. Cela permet d'obtenir une transformation thermique, par exemple une torréfaction, la plus homogène possible sur l'ensemble de la charge (diminution des incuits et des morceaux trop cuits...).

Ainsi, comme illustré de matière schématique en figure 3, la matière M est déplacée dans deux soles adjacentes 3, dans des directions opposées, respectivement vers le centre et vers l'extérieur du four et vice-et-versa.

Pour ce faire, chacune des deux soles 3 adjacentes est munie d'une ou plusieurs ouvertures débouchantes de transfert 30, 31 respectivement réalisées à proximité, de préférence autour de l'arbre rotatif 4 et à la périphérie extérieure des soles 3.

Dans l'exemple illustré de la figure 1, l'agencement des différentes soles 3 et de leurs ouvertures débouchantes de transfert 30, 31 génère un déchargement final de la matière M à la périphérie de l'enveloppe 3 tandis que dans l'exemple de la figure 3, l'extraction finale de la matière M est réalisée de manière centrale autour de l'arbre rotatif 4.

Autrement dit, dans un four 1, la charge de matière M est fournie au niveau de la sole supérieure 3 et râblée pour passer à travers celle-ci par une ou plusieurs ouvertures de transfert 30, 31 débouchant sur la sole 3 immédiatement inférieure, et ainsi de suite. La matière M passe donc sur et à travers chaque sole 3 jusqu'à l'ouverture inférieure 21 où la matière est déchargée.

Comme montré en figure 1, des gaz chauds G, par exemple des fumées de combustion, circulant généralement à contre-courant de la charge, portent le four à la température désirée et provoquent la ou les réactions souhaitées de traitement thermique (séchage poussé, torréfaction, etc.) de la charge. La chaleur est donc produite par la combustion soit de constituants de la charge elle-même, soit d'un combustible dédié. Par exemple, des brûleurs à combustible liquide 12 peuvent être agencés au travers de l'enveloppe 2 au niveau de certaines des soles 3. On peut également injecter dans le four de la vapeur d'eau pour en améliorer le contrôle. Le four fonctionne généralement sous atmosphère contrôlée et comporte des moyens de contrôle de la température et du temps de séjour de la charge dans le four. L'alimentation en charge peut être adaptée en continu de manière à maintenir constante l'épaisseur du lit râblé à l'intérieur du four. Un tel four fonctionnant en continu est notamment décrit dans une installation d'incinération des boues de station d'épuration: [6].

Lorsque les inventeurs ont mis en œuvre un tel four pour la torréfaction d'une biomasse ligno-cellulosique, ils ont pu mettre à jour différents problèmes liés à la forme et l'agencement des dents telles que décrites ci-dessus.

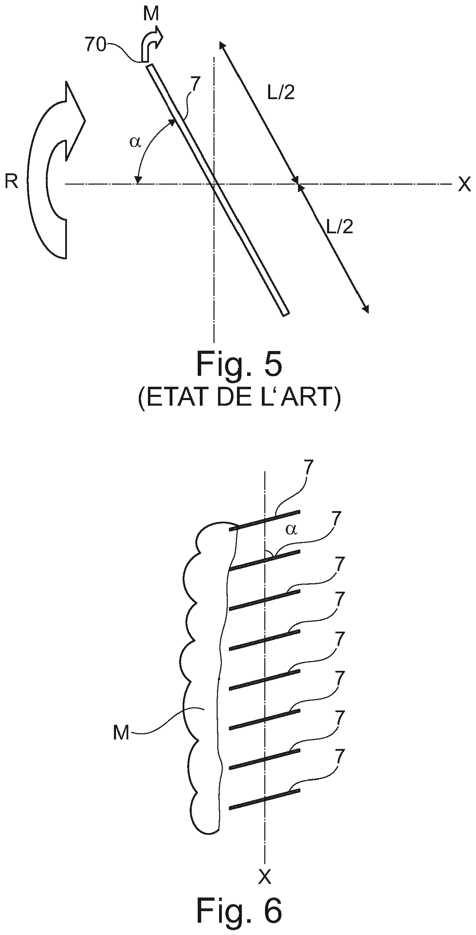

Tout d'abord, le déplacement en rotation R des dents rectangulaires droites a plus tendance à pousser la matière vers l'avant plutôt que de la séparer et l'entrainer vers la direction centrale ou extérieure. Autrement dit, les dents créent en quelque sorte un amas de matière qui forme un mur en extrémité de dents, ce dernier entrant en rotation R avec le mouvement des bras. Cela est symbolisé en figures 4 et 6, où l'on voit qu'un amas de matière M est formé en bout de l'arête d'attaque verticale 70 d'une dent de râblage 7. L'amas de matière M est ainsi poussé par l'arête d'attaque 70 selon la rotation R du bras de râblage 7.

Ce mur de particules a tendance à être renforcé avec l'angle α d'inclinaison les dents. Ainsi, avec les dents actuelles, plus on augmente la valeur α afin de régler les paramètres de transfert du four, plus on diminue l'espace entre deux dents adjacentes, ce qui provoque des blocages et le renforcement du mur de particules de la charge qui est poussé par l'extrémité des dents et ne se déplacent donc pas latéralement.

Comme montré en figure 6, les dents identiques 7 d'un même bras, centrées sur son axe X et inclinées toutes avec le même angle α génèrent un amas ou mur de matière M sur toute la longueur du bras.

FR 536540 A décrit un four mécanique à griller les pyrites et tous autres minerais sulfurés, du type dit à soles fixes et à arbre central tournant.

FR 2 376 391 A1 décrit des ringards destinés à déplacer des matières diverses, ainsi qu'un dispositif et un procédé utilisant ces ringards pour déplacer lesdites matières, par exemple pendant des opérations de thermolyse sur une sole tournante d'un four.

GB 201216A décrit un râteau pour four de calcination mécanique.

DE 222 21 635 A1 décrit un sco pour déplacer un matériau granulaire, comportant une structure métallique interne ayant un agencement de refroidissement, une grille métallique fixée à la structure métallique et un matériau céramique qui remplit au moins partiellement les espaces ouverts de la grille métallique.

WO 2017/134075 A1 décrit un four à soles multiples pour un traitement thermique à une température n'excédant pas 350°C.

Par conséquent, il existe un besoin d'améliorer les fours à soles multiples notamment afin d'éviter, à tout le moins minimiser, les amas de charge induits par les dents de râblage qui nuisent à un transfert homogène et maitrisé de la charge de matière en circulation qui doit être traitée thermiquement.

Le but de l'invention est de répondre au moins en partie à ce besoin.

### Exposé de l'invention

Pour ce faire, l'invention a pour objet un four à soles multiples selon la revendication 1, destiné à traiter thermiquement une charge de matière M. Ce four à soles multiples comprend:
- une enveloppe d'axe central comprenant :
   - une ouverture débouchante supérieure, destinée à être alimentée par la charge de matière à traiter,
   - une ouverture débouchante inférieure par laquelle la charge de matière traitée est destinée à être évacuée,
- un arbre monté en rotation autour de l'axe central à l'intérieur de l'enveloppe,
- une pluralité de soles fixées à l'intérieur de l'enveloppe en étant parallèles entre elles, les soles comprenant chacune une ou plusieurs ouvertures débouchantes adaptée(s) pour transférer de la matière M râblée à la sole agencée immédiatement en dessous, la ou les ouvertures de transfert d'une sole étant agencée(s) à proximité de l'arbre rotatif tandis que celle(s) de la sole adjacente est(sont) agencée(s) à la périphérie extérieure de ladite sole adjacente,
- au moins un bras de râblage fixé à l'arbre rotatif, au-dessus de chaque sole et comprenant des dents de râblage fixées perpendiculairement au bras.

Dans un tel four, la rotation de l'arbre permet de traiter thermiquement et transférer la matière M râblée par les dents selon un parcours en hélice sur la hauteur de l'enveloppe entre ses ouvertures supérieure et inférieure.

Selon l'invention, chaque dent de râblage présente une arête avant qui est inclinée du bas vers le haut, l'arête avant inclinée constituant l'arête d'attaque de la matière M à râbler.

Ainsi, l'invention consiste essentiellement à définir un nouveau profil de dent de râblage de la matière à traiter thermiquement avec une arête d'attaque de la matière non plus verticale comme dans l'art antérieur, mais inclinée.

Grâce à son inclinaison, l'arête d'attaque des dents va favoriser la séparation des particules de la matière et donc permettre un étalement et transfert plus homogène de la matière sur la plus grande surface de chaque sole.

On précise que l'arête d'attaque d'une dent est l'arête qui est en contact en premier avec la matière à râbler qui arrive.

Ainsi, lorsque la matière à râbler arrive à la périphérie d'une sole donnée, l'arête d'attaque d'une dent est l'arête latérale extérieure, tandis que lorsque la matière arrive dans la partie centrale d'une sole, l'arête d'attaque est l'arête latérale intérieure.

Selon l'invention, l'arête d'attaque de chaque dent de râblage est inclinée de telle sorte que la largeur du dessous de la dent est supérieure à celle du dessus.

Avantageusement, l'arête d'attaque de chaque dent de râblage est inclinée selon un angle compris entre 5° et 70° par rapport à l'axe longitudinal (X) du bras.

Selon une autre variante de réalisation avantageuse, chaque dent de râblage présente en vue de face une forme de triangle ou de trapèze, de préférence rectangle.

De préférence, les dents de râblage présentent chacune une hauteur comprise entre 100 et 500mm pour une longueur comprise entre 100 et 800mm.

Selon une première configuration avantageuse, chaque dent de râblage peut être plane.

Selon une deuxième configuration avantageuse, chaque dent de râblage est constituée d'une portion plane comprenant l'arête d'attaque de la matière et une portion défléchie dans le prolongement de la portion plane, la portion plane étant orthogonale à l'axe longitudinal du bras tandis que la portion défléchie est inclinée avec une ou plusieurs inclinaisons différentes de 90° par rapport à l'axe longitudinal du bras.

La portion défléchie peut être constituée par une autre portion plane formant un angle non nul avec la portion plane à arête d'attaque ou par une portion incurvée.

Selon un mode de réalisation avantageux, au moins une partie des dents supportées par un même bras étant décalées latéralement par rapport à l'axe longitudinal (X) du bras, tout en ayant leurs arêtes arrières, dite arêtes de fuite, distantes les uns des autres selon le même pas (P) sur la longueur du bras.

Lorsque le four selon l'invention est destiné à la torréfaction de biomasse, la température est de préférence comprise entre 200 et 300°C. La température est de préférence encore comprise entre 250 et 300°C pour de la biomasse type bois et entre 220 et 280°C pour de la biomasse de type agricole. En effet, le bois réagit à des températures plus élevées que les biomasses agricoles.

Le four à soles multiples selon l'invention peut être intégré à une installation de conversion thermochimique de biomasse en un gaz de synthèse largement connu sous l'appellation Syngaz, par gazéification dans un réacteur de gazéification en vue de produire un combustible ou un carburant, notamment un carburant liquide, ou un autre produit de synthèse. La synthèse peut être faite selon le procédé Fischer-Tropsch pour produire du gazole liquide ou un autre carburant.

L'invention concerne également l'utilisation du four décrit pour la torréfaction de la biomasse ligno-cellulosique ou pour tout traitement thermique de minerais (coke, chamotte...), de charbon, de boues de station d'épuration ou pour la fabrication d'un combustible de substitution au charbon d'origine fossile, selon la revendication 10.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique en coupe longitudinale d'un exemple four à soles multiples selon l'état de l'art ;
- la figure 2 est une vue schématique en perspective d'un bras de râblage d'une matière à traiter dans un four selon la figure 1 ;
- la figure 3 est une vue schématique en coupe longitudinale partielle d'un autre exemple de four à soles multiples selon l'état de l'art ;
- la figure 4 est une vue schématique de face d'une dent de râblage de forme rectangulaire selon l'état de l'art, supportée par un bras dans un four selon l'état de l'art, la figure 4 montrant l'amas de matière M qui se forme sur l'arête verticale d'attaque de la matière ;
- la figure 5 est une vue de dessus d'une dent de râblage rectangulaire selon l'état de l'art, la figure 5 montrant l'angle d'inclinaison de la dent et par rapport à l'axe longitudinal du bras ;
- la figure 6 est une vue de dessus d'un bras de râblage selon l'état de l'art supportant une pluralité de dents rectangulaires toutes centrées sur l'axe longitudinal du bras et inclinées avec la même inclinaison ;
- la figure 7 est une vue est une vue schématique de face d'une dent de râblage de forme trapézoïdale rectangle selon l'invention, supportée par un bras dans un four, la figure 7 montrant le déplacement de matière M par la dent;
- la figure 8 est une vue de dessus d'une dent de râblage selon un mode de réalisation avantageux de l'invention, la figure 8 montrant la partie incurvée de la dent dans le prolongement de sa partie plane;
- la figure 9 est une vue de dessus d'un bras de râblage selon l'invention supportant une pluralité de dents planes selon la figure 7, en décalage axial une sur deux sur l'axe longitudinal du bras;
- la figure 10 est une vue de dessus d'un bras de râblage selon l'invention supportant une pluralité de dents avec partie plane et partie incurvée selon la figure 8, en décalage axial une sur deux sur l'axe longitudinal du bras.

Dans la description qui va suivre ainsi que dans l'ensemble de la demande, les termes « avant », « arrière », sont utilisés par référence avec les sens de transfert de la biomasse dans un four à soles multiples selon la présente invention. Ainsi, une arête avant d'une dent de râblage est l'arête qui attaque en premier lieu la matière à traiter au sein du four, tandis que l'arête arrière est celle qui est en contact avec la matière séparée au préalable par l'arête d'attaque.

De même, les termes « supérieur », « inférieur », « dessus », « dessous » sont à comprendre en référence avec la configuration de fonctionnement à la verticale d'un four selon l'invention. Ainsi, l'ouverture débouchante supérieure constitue l'orifice entrée de la matière à traiter thermiquement tandis que l'ouverture inférieure désigne l'orifice de sortie de la matière traitée.

Les figures 1 à 6 relatives à des fours à soles multiples avec bras de râblage supportant des dents de râblage selon l'état de l'art ont déjà été commentées en préambule. Elles ne seront donc pas décrites ci-après.

Par souci de clarté, un même élément selon l'état de l'art et selon l'invention est désigné par une seule et même référence numérique.

On précise que l'on décrit par la suite seulement des dents de râblage selon l'invention et leur agencement sur un bras support, ces éléments pouvant être montés tels quels dans un four à soles multiples décrit en relation avec les figures 1 et 3 en lieu et place d'un bras avec ses dents de râblage selon l'état de l'art illustrés en figures 2, 4, 5 et 6.

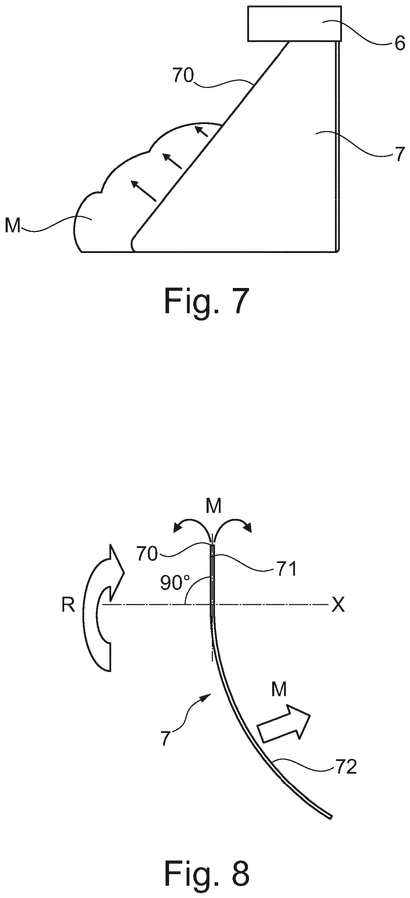

On a représenté en figure 7, une dent de râblage 7 conforme à l'invention.

Cette dent 7 de forme trapézoïdale rectangle comprend une arête avant 70 qui est inclinée du bas vers le haut, depuis la plus grande largeur vers la plus petite largeur du trapèze.

Cette arête avant 70 constitue l'arête d'attaque de la matière M à traiter thermiquement au sein du four. Cette arête d'attaque de la matière M va favoriser la séparation des particules de matière et ainsi permettre d'éviter la création d'un amas qui forme un mur qui entre en rotation avec le mouvement des bras comme avec une dent rectangulaire selon l'état de l'art.

A titre indicatif, une dent de râblage 7 avec arête d'attaque 70 selon l'invention peut avoir une hauteur comprise entre 100 et 500mm, et des largeurs comprises entre 100 et 800mm. Les dents selon l'invention peuvent être métalliques.

Selon une variante de réalisation montrée en figure 7, une dent de râblage 7 selon l'invention est plane.

Selon une autre variante montrée en figure 8, la dent de râblage 7 est constituée d'une portion plane 71 comprenant l'arête d'attaque 70 et une portion défléchie 72 dans le prolongement de la portion plane. La portion plane 71 est fixée en étant agencée orthogonalement à l'axe longitudinal X du bras qui supporte la dent, tandis que la portion défléchie est inclinée avec une ou plusieurs inclinaisons différentes de 90° par rapport à l'axe longitudinal X du bras. Sur la figure 8, la portion défléchie 72 est une portion incurvée.

La portion plane 71 perpendiculaire à l'axe X va permettre à la dent de travailler perpendiculairement au bras en rotation. Ainsi, la portion plane 71 va venir séparer par le biais de l'arête d'attaque 70 la matière M afin de créer un véritable sillon de matière, comme symbolisé par les deux flèches en figure 8.

D'un côté du sillon (flèche de droite sur la figure 8), la matière séparée peut être déplacer par la surface de dent et de l'autre côté du sillon (flèche de gauche sur la figure 8), la matière qui va rester en place et ensuite la portion défléchie 72, à l'arrière de la dent déplace la matière séparée. On favorise ainsi la séparation et le transfert homogène de la matière sur la surface de la sole en dessous.

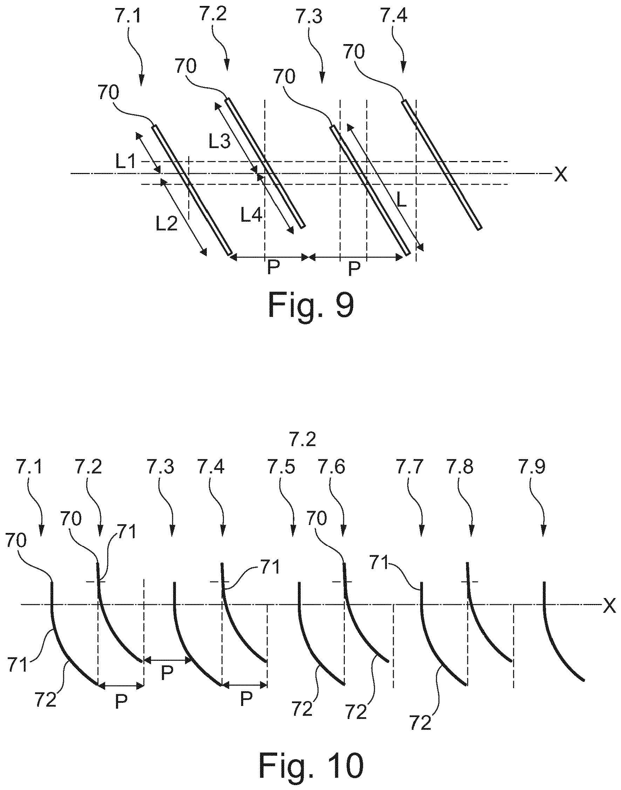

Un mode de réalisation avantageux de fixation de dents identiques 7 de forme plane à arête d'attaque 70 inclinée selon l'invention est montré en figure 9. Ici, toutes les dents sont décalées latéralement par rapport à l'axe X du bras.

Ainsi, la première dent 7.1 a une largeur L1 répartie d'un côté de l'axe X qui est inférieure à la largeur L2 répartie de l'autre côté de l'axe X.

La deuxième dent 7.2, adjacente à la première dent 7.1 a quant à elle une largeur L3 répartie d'un côté de l'axe X qui est supérieure à la largeur L4 répartie de l'autre côté de l'axe X.

Afin de ne pas créer de rétrécissement propice aux bouchons de matière, le pas P entre les extrémités arrières des dents 7.1 à 7.4 est constant sur toute la longueur du bras et ce quel que soit le décalage de chacune des dents.

La figure 10 montre également une configuration avec décalage des dents 7.1 à 7.9 selon l'invention mais avec des dents 7 à portion plane 71 perpendiculaire à l'axe prolongée par une portion incurvée 72.

D'autres variantes et améliorations peuvent être prévues sans pour autant sortir du cadre de l'invention.

Si dans les modes de réalisations illustrés, la dent selon l'invention a une forme trapézoïdale rectangle, on peut prévoir en lieu et place une dent de forme triangulaire rectangle et de manière plus générale toute forme de dent avec une arête d'attaque de la matière qui est inclinée sur la hauteur de la dent.

Les dents de râblage sont de préférence métalliques mais peuvent être réalisées en tout matériau compatible avec les conditions rencontrées dans un four à soles multiples.

L'invention est définie dans les revendications 1 et 10 mais n'est pas limitée aux exemples qui viennent d'être décrits ; on peut notamment combiner entre elles des caractéristiques des exemples illustrés au sein de variantes non illustrées.

### Références citées

[1] : Tijmensen MJA, Faaij APC, Hamelinck CN, Hardeveld MRM. « Exploration of the possibilities of Fischer Tropsch liquids and power via biomass gasification ». Biomass& Bioenergy 2002; 23: 129-52.
[2]: Haarlemmer G, Boissonnet G, Imbach J, Setier P-A, Peduzzi E. « Second generation BtL type biofuels - a production cost analysis ». Energy & Environmental Science 2012; 7.
[3]: Simpson WT. « Equilibrium Moisture Content of Wood in Outdoor Locations in the United States and Worldwide ». FPL-RN-0268. Forest Products Laboratory: Madison, Wisconsin, 1998.
[4]: Höldrich A, Hartmann H. « In Storage of wood logs - «Drying speed and dry matter losses », 14th European Biomass Conference, Paris, France, 2005.
[5]: Scholz V, Idler C, Daries W « In Energy loss and mould development during storage of wood chips in unventilated piles », 14th European Biomass Conference, Paris, France, 2005.
[6]: C. Brunner «Biological sludge incineration», Waste management, Vol.11, pp 155-162, 1991.

## Revendications

1. Four à soles multiples (1), destiné à traiter thermiquement une charge de matière M, comprenant :
- une enveloppe (2) d'axe central (Z) comprenant :
• une ouverture débouchante supérieure (20), destinée à être alimentée par la charge de matière à traiter,
• une ouverture débouchante inférieure (21), par laquelle la charge de matière traitée est destinée à être évacuée,
- un arbre (4) monté en rotation autour de l'axe central (Z) à l'intérieur de l'enveloppe,
- une pluralité de soles (3) fixées à l'intérieur de l'enveloppe en étant parallèles entre elles, les soles comprenant chacune une ou plusieurs ouvertures débouchantes (30, 31) adaptée(s) pour transférer de la matière M râblée à la sole agencée immédiatement en dessous, la ou les ouvertures de transfert (30) d'une sole étant agencée(s) à proximité de l'arbre rotatif (4) tandis que celle(s) (31) de la sole adjacente est(sont) agencée(s) à la périphérie extérieure de ladite sole adjacente,
- au moins un bras de râblage (5) fixé à l'arbre rotatif, au-dessus de chaque sole (3) et comprenant des dents de râblage (7) fixées perpendiculairement au bras, chaque dent de râblage (7) présentant une arête avant qui est inclinée du bas vers le haut, l'arête avant inclinée constituant l'arête d'attaque (70) de la matière M à râbler, l'arête d'attaque (70) de chaque dent de râblage étant inclinée de telle sorte que la largeur du dessous de la dent est supérieure à celle du dessus.

2. Four à soles multiples selon la revendication 1, l'arête d'attaque (70) de chaque dent de râblage étant inclinée selon un angle compris entre 5° et 70° par rapport à l'axe longitudinal (X) du bras.

3. Four à soles multiples selon l'une des revendications 1 à 2, chaque dent de râblage présentant en vue de face une forme de triangle ou de trapèze, de préférence rectangle.

4. Four à soles multiples selon l'une des revendications précédentes, les dents de râblage présentant chacune une hauteur comprise entre 100 et 500mm pour une longueur comprise entre 100 et 800mm.

5. Four à soles multiples selon l'une des revendications précédentes, chaque dent de râblage étant plane.

6. Four à soles multiples selon l'une des revendications 1 à 4, chaque dent de râblage étant constituée d'une portion plane (71) comprenant l'arête d'attaque de la matière et une portion défléchie (72) dans le prolongement de la portion plane, la portion plane étant orthogonale à l'axe longitudinal (X) du bras tandis que la portion défléchie est inclinée avec une ou plusieurs inclinaisons différentes de 90° par rapport à l'axe longitudinal (X) du bras.

7. Four à soles multiples selon la revendication 6, la portion défléchie étant constituée par une autre portion plane formant un angle non nul avec la portion plane à arête d'attaque.

8. Four à soles multiples selon la revendication 6, la portion défléchie étant constituée par une portion incurvée.

9. Four à soles multiples selon l'une des revendications précédentes, au moins une partie des dents supportées par un même bras étant décalées latéralement par rapport à l'axe longitudinal (X) du bras, tout en ayant leurs arêtes arrières, dite arêtes de fuite, distantes les uns des autres selon le même pas (P) sur la longueur du bras.

10. Utilisation du four à soles multiples selon l'une des revendications précédentes pour la torréfaction de biomasse, notamment biomasse ligno-cellulosique, ou pour le traitement thermique de minerais, de charbon, de boues de station d'épuration ou pour la fabrication d'un combustible de substitution au charbon d'origine fossile.

## Patentansprüche

1. Mehretagenofen (1), der zur thermischen Behandlung einer Materialcharge M bestimmt ist, umfassend:
- ein Gehäuse (2) mit einer zentralen Achse (Z), umfassend:
• eine mündende obere Öffnung (20), die dazu bestimmt ist, mit der zu behandelnden Materialcharge versorgt zu werden,
• eine mündende untere Öffnung (21), durch welche die behandelte Materialcharge abgeführt werden soll,
- eine Welle (4), die um die zentrale Achse (Z) drehend im Inneren des Gehäuses gelagert ist,
- eine Mehrzahl von Etagen (3), die im Inneren des Gehäuses parallel zueinander befestigt sind, wobei die Etagen jeweils eine oder mehrere mündende Öffnungen (30, 31) umfassen, die geeignet ist(sind), gekrähltes Material M zu der unmittelbar darunter angeordneten Etage zu transferieren, wobei die Transferöffnung(en) (30) einer Etage in der Nähe der drehenden Welle (4) angeordnet ist(sind), während diejenige(n) (31) der benachbarten Etage am äußeren Umfang der benachbarten Etage angeordnet ist(sind),
- mindestens einen Krählarm (5), der an der drehenden Welle oberhalb jeder Etage (3) befestigt ist und Krählzähne (7) umfasst, die senkrecht zum Arm befestigt sind, wobei jeder Krählzahn (7) eine Vorderkante aufweist, die von unten nach oben geneigt ist, wobei die geneigte Vorderkante die Anströmkante (70) des zu krählenden Materials M darstellt, wobei die Anströmkante (70) jedes Krählzahns so geneigt ist, dass die Breite des Unterteils des Zahns größer als die des Oberteils ist.

2. Mehretagenofen nach Anspruch 1, wobei die Anströmkante (70) jedes Krählzahns um einen Winkel zwischen 5° und 70° in Bezug auf die Längsachse (X) des Arms geneigt ist.

3. Mehretagenofen nach einem der Ansprüche 1 bis 2, wobei jeder Krählzahn in der Vorderansicht eine Dreiecks- oder Trapezform, bevorzugt rechtwinklig, aufweist.

4. Mehretagenofen nach einem der vorhergehenden Ansprüche, wobei die Krählzähne jeweils eine Höhe zwischen 100 und 500 mm bei einer Länge zwischen 100 und 800 mm aufweisen.

5. Mehretagenofen nach einem der vorhergehenden Ansprüche, wobei jeder Krählzahn plan ist.

6. Mehretagenofen nach einem der Ansprüche 1 bis 4, wobei jeder Krählzahn aus einem planen Abschnitt (71), der die Anströmkante des Materials umfasst, und einem abgelenkten Abschnitt (72) in der Verlängerung des planen Abschnitts besteht, wobei der plane Abschnitt rechtwinklig zur Längsachse (X) des Arms ist, während der abgelenkte Abschnitt mit einer oder mehreren von 90° verschiedenen Neigungen in Bezug auf die Längsachse (X) des Arms geneigt ist.

7. Mehretagenofen nach Anspruch 6, wobei der abgelenkte Abschnitt aus einem weiteren planen Abschnitt besteht, der einen Winkel ungleich null mit dem planen Abschnitt mit Anströmkante bildet.

8. Mehretagenofen nach Anspruch 6, wobei der abgelenkte Abschnitt aus einem gekrümmten Abschnitt besteht.

9. Mehretagenofen nach einem der vorhergehenden Ansprüche, wobei mindestens ein Teil der von demselben Arm gehalterten Zähne in Bezug auf die Längsachse (X) des Arms seitlich versetzt ist, wobei ihre Hinterkanten, Abströmkanten genannt, voneinander gemäß der gleichen Teilung (P) über die Länge des Arms beabstandet sind.

10. Verwendung des Mehretagenofens nach einem der vorhergehenden Ansprüche zum Rösten von Biomasse, insbesondere lignocellulosehaltiger Biomasse, oder zur thermischen Behandlung von Mineralien, Kohle, Kläranlagenschlämmen, oder zur Herstellung eines Ersatzbrennstoffs für Kohle fossilen Ursprungs.

## Claims

1. Multiple hearth furnace (1), intended to thermally treat a charge of material M, comprising:
- an enclosure (2) of central axis (Z) comprising:
• a top opening aperture (20), intended to be supplied with the charge of material to be treated,
• a bottom opening aperture (21), through which the treated charge of material is intended to be discharged,
- a shaft (4) mounted to rotate about the central axis (Z) inside the enclosure,
- a plurality of hearths (3) fixed inside the enclosure parallel to one another, the hearths each comprising one or more opening apertures (30, 31) suitable for transferring rabbled material M to the hearth arranged immediately below, the transfer aperture or apertures (30) of one hearth being arranged in proximity to the rotary shaft (4) while that or those (31) of the adjacent hearth is or are arranged at the outer periphery of said adjacent hearth,
- at least one rabbling arm (5) fixed to the rotary shaft, above each hearth (3) and comprising rabbling teeth (7) fixed at right angles to the arm, each rabbling tooth (7) having a front edge which is inclined from bottom to top, the inclined front edge constituting the leading edge (70) for the material M to be rabbled, the leading edge (70) of each rabbling tooth being inclined in such a way that the width of the bottom of the tooth is greater than that of the top.

2. Multiple hearth furnace according to Claim 1, the leading edge (70) of each rabbling tooth being inclined by an angle lying between 5° and 70° with respect to the longitudinal axis (X) of the arm.

3. Multiple hearth furnace according to one of Claims 1 to 2, each rabbling tooth having, when seen from the front, a triangular or trapezoidal, preferably rectangular, form.

4. Multiple hearth furnace according to one of the preceding claims, the rabbling teeth each having a height of between 100 and 500 mm for a length of between 100 and 800 mm.

5. Multiple hearth furnace according to one of the preceding claims, each rabbling tooth being flat.

6. Multiple hearth furnace according to one of Claims 1 to 4, each rabbling tooth being composed of a flat portion (71) comprising the leading edge for the material and a deflected portion (72) in the extension of the flat portion, the flat portion being orthogonal to the longitudinal axis (X) of the arm while the deflected portion is inclined with one or more inclinations different from 90° with respect to the longitudinal axis (X) of the arm.

7. Multiple hearth furnace according to Claim 6, the deflected portion being composed of another flat portion forming a non-zero angle with the flat portion with leading edge.

8. Multiple hearth furnace according to Claim 6, the deflected portion being composed of an incurved portion.

9. Multiple hearth furnace according to one of the preceding claims, at least some of the teeth supported by one and the same arm being offset laterally with respect to the longitudinal axis (X) of the arm, while having their rear edges, called trailing edges, separated from one another by the same pitch (P) over the length of the arm.

10. Use of the multiple hearth furnace according to one of the preceding claims for the roasting of biomass, notably ligno-cellulosic biomass, or for the heat treatment of mineral ores, coal, purification station sludges or for the production of a substitute fuel for coal of fossil origin.
